# EUROPEAN PATENT SPECIFICATION

(11) **EP 1 113 582 B1**
(45) Date of publication and mention of the grant of the patent: **29.11.2006**
(21) Application number: 00309595.7
(22) Date of filing: 31.10.2000
(51) Int. Cl.: H04B 1/04, H04R 25/00, H04B 1/034

(54) **Wireless microphone apparatus and transmitter device for wireless microphone**
Drahtloser Mikrofon und Sender für drahtlosen Mikrofon
Microphone sans fil et émetteur pour microphone sans fil

(30) Priority: 28.12.1999 JP 37428299
(43) Date of publication of application: 04.07.2001
(73) Proprietor: Circuit Design Inc., Minamiazumi, Nagano, 399-8303 (JP)
(72) Inventor: Koike, Yukinaga, Nagano 390-0831 (JP)
(74) Representative: Gill, David Alan

(56) References cited:
- EP-A- 0 281 427
- DE-A- 19 603 653
- GB-A- 2 235 533
- US-A- 4 977 610
- US-A- 5 920 234

## Description

The present invention relates to a wireless microphone apparatus and transmitter device for such a microphone, and particularly to a transmitter device for FM wireless microphone with a band of 800 MHz.

Wireless microphone systems such as those for use in a concert hall, a live stage or wayside recording are generally classified into either a hand-held microphone transmitter system or a belt pack microphone transmitter system. The respective transmitter systems are compact and lightweight while a long-term operation (about ten hours) is required. It is however difficult to achieve both the size and weight reductions and such long-term operation since the transmitter systems operate under battery power.

A hand-held transmitter apparatus typically has an integral structure of a microphone element, a window screen and a body case for receiving a battery, but according to differences in voice quantity, voice quality or preference of tone characteristics of a singer or a speaker, the singer's demands to exchange the microphone elements of the respective preferences to use them are increasing as in the case of a wire microphone.

For this purpose, a type capable of separating a microphone part from a transmitter part was developed, but it was necessary to incorporate various circuits for improving sound quality such as a signal-to-noise ratio or a dynamic range into the wireless microphone systems for business, and a body itself of the transmitter part has no other choice but to be formed in a large size. As a result of this, the entire design became bad when mounting the microphone and a case to be used was limited.

In a conventional transmitter device for wireless microphone, a high-frequency oscillating part is roughly classified into a quartz multiplication method for multiplying a quartz oscillator to obtain a desired frequency and a PLL method for generating the desired frequency by a PLL circuit.

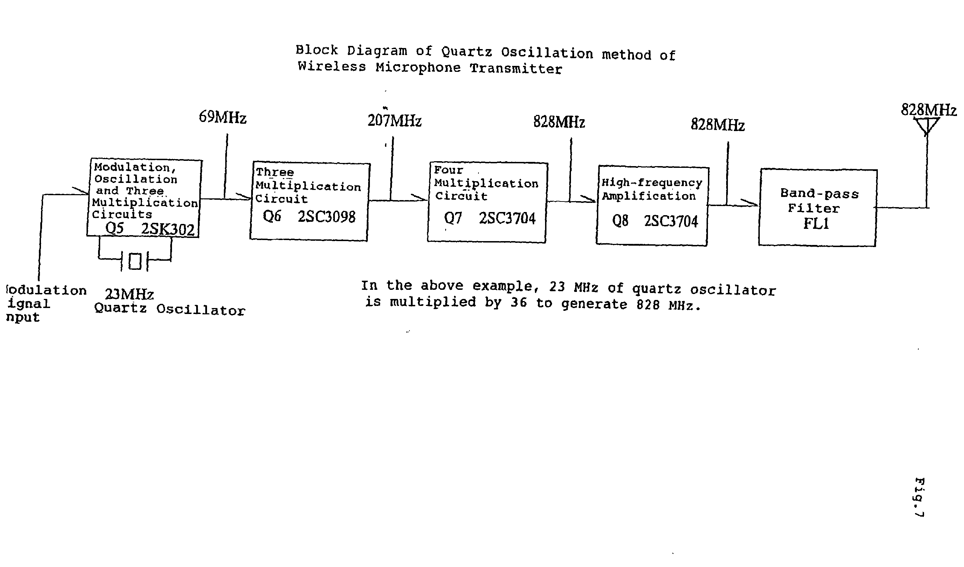

Here, in the quartz multiplication method of the conventional technique, as shown in Fig. 7, a multiplication of thirty six times is needed in order to obtain a desired frequency of 828 MHz of a frequency band of 800MHz from a fundamental oscillation frequency of 23 MHz by a quartz oscillator and as a result of this, a circuit within the apparatus required a large mounting area since a filter circuit and a multiplication circuit for reducing unnecessary radiation were necessary. Also, even in case of an overtone oscillation type of the quartz oscillator, it was impossible to perform modulation deeply, and oscillation with a high-pass frequency of a band of 800 MHz was difficult to use due to danger such as breakage since a thickness of a quartz itself became very thin.

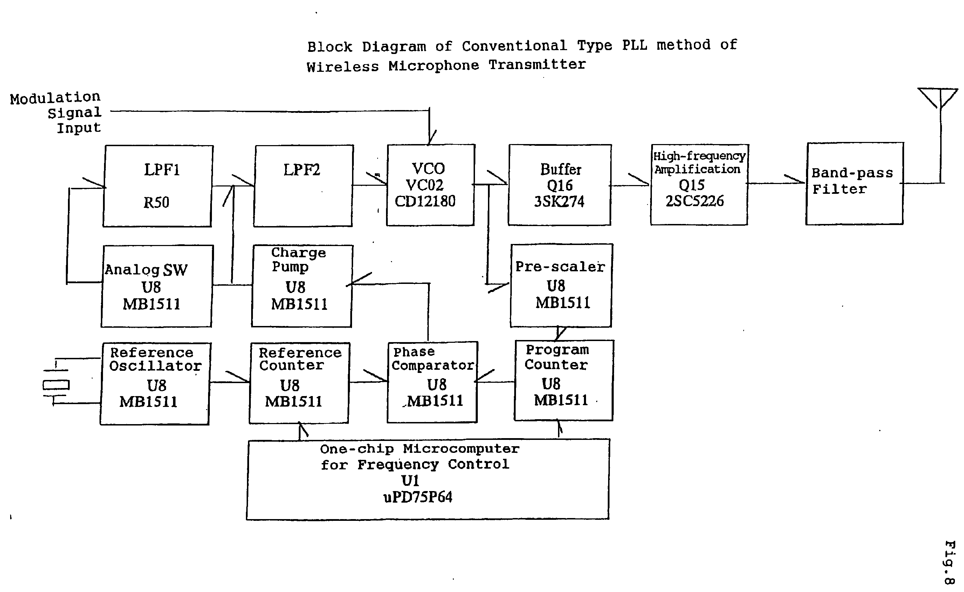

On the other hand, the PLL method of the conventional technique has merits in that frequencies can freely be set and changed by a program though a circuit configuration is complicated and a band-pass filter of a transmission output stage can be simplified since an original oscillation frequency of VOC is equal to a transmission frequency. However, as shown in Fig. 8 by the concrete example, since a circuit is complicated, the entire circuit current increases and a large-size battery needs to be mounted, with the result that miniaturization was difficult.

Generally, standards of a connector of the wire microphone are unified into a canon connector (XLR), so that development of a transmitter device of a wireless microphone for business with a size similar to that of said wire connector has been desired for a long time.

EP-A-0281427 discloses a radio controlled toy comprising a transmitter device associated with a microphone and-including means for connection to the microphone, low frequency amplification means, surface acoustic waver oscillation means, modulation means and high frequency amplification means, high frequency amplification means, and antenna means and a power source mean but which exhibits limitations serving to limit the degree to which the size and weight of the device can be reduced while maintaining high fidelity quality.

Also, in US-A-4977610 is disclosed a wireless communication apparatus and method of operating the same, and which likewise exhibits the above-mentioned limitations as indeed does the subject matter of US-A-5920234 which discloses a buffered oscillator transmitter arrangement.

The present invention therefore seeks to provide a wireless microphone apparatus and related transmitter device having advantages over known such apparatus and devices.

In order to provide a compact and lightweight wireless microphone for business and a transmitter device of the microphone with a size similar to that of a canon connector (XLR) in view of problems of such conventioanl techniques, it is an object of the present invention to provide a transmitter device for a wireless microphone comprising:
connector means for making connection to a microphone from which a voice signal is received;
low-frequency amplification means for amplifying the voice signal;
high-frequency amplification means for amplifying a high-frequency modulation signal modulated,
antenna means for radiating a high-frequency output signal amplified by radio waves, and
power source means for supplying electric power of a predetermined voltage; and characterized by:
   surface acoustic wave oscillation means having a surface acoustic wave resonator capable of directly oscillating a high-frequency oscillation signal,
   modulation means for performing frequency modulation of the high-frequency oscillation signal by directly modulating the surface acoustic wave resonator with the amplified voice signal, the modulation means including an oscillation element, a modulation and oscillation circuit, and a buffer amplification circuit, and is arranged such that the voice signal superimposed on a bias voltage to a variable capacitance diode is applied to the oscillation element, and modulation is performed by changing a load capacity of the surface acoustic wave oscillation means inserted into a base terminal of said surface acoustic wave resonator, wherein said buffer amplification circuit is arranged to minimize reflection from the antenna means and the high-frequency amplification means.

In order to remarkably improve sound quality as the apparatus for business, the present transmitter device further comprises a compander circuit for improving a signal-to-noise ratio and increasing a dynamic range by compressing the voice signal with logarithm (specifically, performing 1/2 logarithm compression), and a pre-emphasis circuit for reducing a noise by making an amplification degree of a high-pass frequency in the voice signal larger than that of other voice frequency regions.

Here, the present invention is characterized in that the surface acoustic wave oscillation means outputs the high-frequency oscillation signal with a band of 800 MHz directly without multiplication.

The modulation means includes an oscillation element, a modulation and oscillation circuit, and a buffer amplification circuit, and the voice signal superimposed on a bias voltage to a variable capacitance diode is applied to the oscillation element and modulation is performed by changing a load capacity of the surface acoustic wave oscillation means inserted into a base terminal of said oscillation element. Then, the high-frequency amplification means amplifies oscillation power of a band of 800 MHz outputted from the modulation means to +10 dBm with transmission output power at the antenna end of the antenna means. A band-pass filter circuit for eliminating a harmonic noise of the high-frequency oscillation signal and matching the impedance to the antenna means is connected to a backward stage of the high-frequency amplification means.

A body case of said transmitter device also serves as the antenna means. Said-body case has a size with about 1/4 the wavelength of the high-frequency oscillation signal, and a length of about 7.5 cm and a diameter of 2.3 cm are achieved. Further, the power source means received in the present device is formed of a battery and a DC-DC converter for increasing an output voltage of 1.5 V of said battery to 3.0 V (finally, the voltage is stabilized to DC 2.7 V to use it by a series regulator), and each the circuit means in the device is formed so as to operate on the same voltage stabilized after said increase. The battery used in transmitter device according to the present invention is one AAA dry battery and 10 hours or longer of continuous operation can be performed. As a result of this, a weight of the present device including the metal receiving case and the battery achieves about 55 g.

As described above, in order to develop a micro-miniature transmitter, in the transmitter device for wireless microphone according to the present invention, technical improvements in conventional compander part, high-frequency part, power source part, body, etc. are entirely made, and a low-frequency audio amplifier of a forward stage of a compander circuit has a two-stage structure of an FET (field-effect transistor) and a bipolar transistor, and even in case of a low power DC voltage (about DC 2.7V), operation can be performed and it is constructed so that good S/N ratio and a large dynamic range can be ensured.

Further, the compander circuit part is formed in a circuit capable of operating on a single power source of 2.7 V by a one-chip structure. Also, all the internal component circuits including a surface acoustic wave (hereinafter called "SAW") resonator modulation circuit including a pre-emphasis circuit are constructed so as to operate on a single DC 2.7 V, with the result that circuit current consumption is reduced to a minimum.

Thus, the biggest factor in implementation of the development of the transmitter device for wireless microphone according to the present invention is that the SAW resonator capable of directly oscillating a band of 800 MHz can be developed. Conventionally, the SAW resonator has had the disadvantages that the frequency largely changes according to an ambient temperature and oscillation may stop if a negative resistance of an oscillation circuit itself become large since the oscillation is difficult due to the higher impedance in the case of resonance compared with a quartz oscillator. The present invention solves this problem by connecting plural transistors in series to increase the negative resistance and thus providing a sufficient oscillation margin.

Moreover, a high-frequency amplification part performs matching for an antenna, and a band-pass filter part for reducing unnecessary radiation can be simplified since the SAW resonator capable of directly oscillating a band of 800 MHz is used.

As the antenna means in the device according to the present invention, since the transmission frequency is a high frequency (a band of 800 MHz) and the 1/4 wavelength is short (about 90 mm), an antenna structure with good radiation efficiency in which a transmitter body is formed as a ground and a microphone body is formed as an antenna is achieved. In the present invention thus, a structure in which the antenna is not exposed to the outside of the device is achieved, and the transmitter device for wireless microphone with good portability as well as excellent design along with weight and size reductions is achieved. The invention is described further hereinafter, by way of example only, with reference to the accompanying drawings of one embodiment of the invention in which:
Fig.1 shows a schematic block diagram illustrating a circuit configuration in a transmitter device for wireless microphone according to the present invention;
Fig.2 shows a block diagram of the more detailed circuit configuration of the transmitter device for wireless microphone according to the invention;
Fig.3 shows an example of a detailed circuit diagram of the transmitter device for wireless microphone according to the invention;
Fig.4 shows an example of a component assembly construction constructing the transmitter device for wireless microphone according to the invention;
Fig.5 shows a combination of the transmitter device for wireless microphone and a microphone fitted in said transmitter device-according to the invention mounting standard connector means;
Fig.6 shows an example of an external view of a wireless microphone apparatus according to the invention;
Fig.7 shows a schematic circuit configuration of a transmitter device for wireless microphone according to a quartz multiplication method of a conventional art; and
Fig.8 shows a schematic circuit configuration of a transmitter device for wireless microphone according to a PLL method of a conventional art.

Details on a wireless microphone apparatus and a transmitter device for the apparatus according to the present invention will be described later with reference to the accompanying drawings.

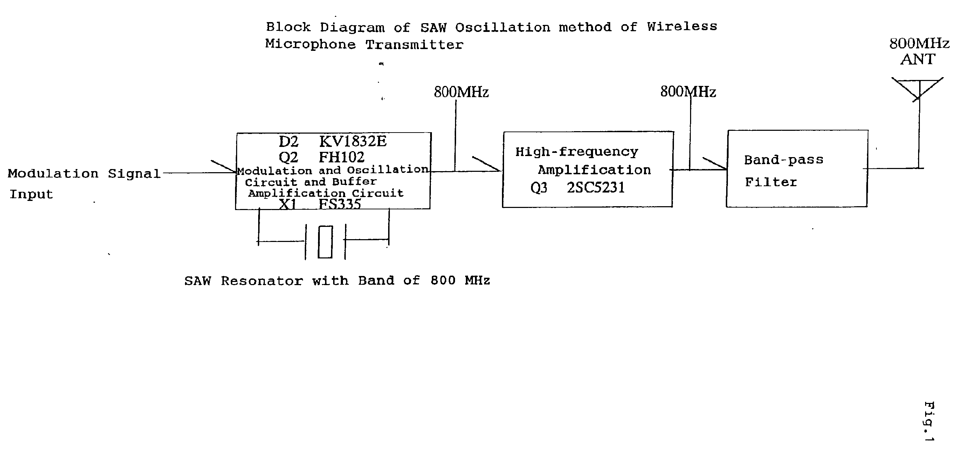

Fig.1 shows a schematic block diagram illustrating a circuit configuration in a transmitter device for wireless microphone according to the present invention.

As shown in Fig.1, in a modulation circuit and an oscillation circuit of a first block, an AF signal from a modulation signal input terminal along with a bias voltage is applied to a variable capacitance diode D2 (KV1832E) and a load capacity of a SAW resonator with a band of 800 MHz inserted into a base circuit of an oscillation element Q2 (FH102) is changed and thereby, FM modulation is performed. In order to increase a negative resistance and stabilize oscillation in the SAW resonator, a dual transistor FH102 is connected in series and used, and a modulation and oscillation circuit and a buffer amplification circuit are formed of a transistor of the same package.

In a high-frequency amplification circuit of a second block, about 0 dBm of electric power of a band of 800 MHz outputted from the buffer amplification circuit is amplified to +10 dBm of transmission power at the antenna end by a high-frequency amplification element Q3 (2SC5231).

A band-pass filter of a third block is formed of two stages of π type low-pass filters in order to attenuate a harmonic two times or higher a band of 800 MHz. Said band-pass filter matches the impedance of an antenna circuit (a microphone body and a body case of a transmitter in the apparatus according to the present invention) other than attenuation of a harmonic noise component.

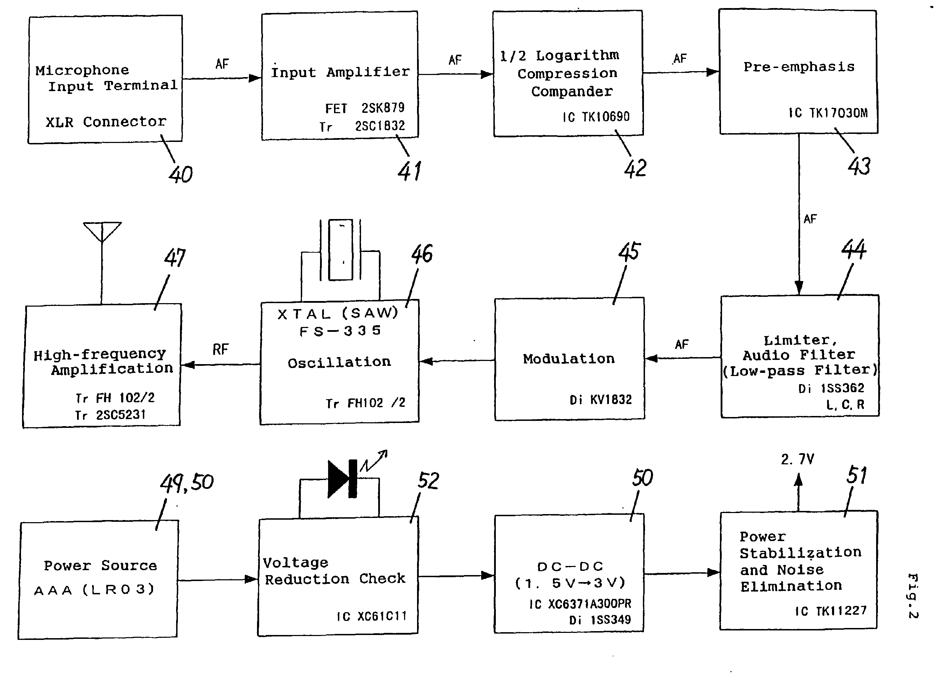

Fig.2 shows a block diagram of the more detailed circuit configuration of the transmitter device for wireless microphone according to the invention.

In a connection to the microphone in the present transmitter device, an industry-standard XLR connector is used. As a result of this, users such as a singer or a speaker can use the microphone having tone characteristics of my preference along with the present transmitter device. Low-frequency amplification of a faint voice signal inputted from the microphone through the XLR connector is performed to a predetermined level by an input amplifier part and further logarithmic compression of the voice signal is performed by a compander part. In the present embodiment, the compression is performed to 1/2 logarithm, but other compression ratios may be used. As a result of this, dynamic range and signal-to-noise ratio characteristics can be improved remarkably. A frequency of the voice signal compressed with logarithm is inputted to a pre-emphasis circuit at the next stage in order to improve sound quality of a high-pass region to make a frequency band of a high-pass voice to a level higher than other voice regions while reducing a hiss noise. In this manner, the voice signal compressed with logarithm and further pre-emphasized is de-emphasized in a receiver unit and is further expanded and reproduced as a matter of course.

The voice signal processed thus passes a low-pass filter for audio to reduce a high-pass noise, and is modulated to an FM signal using the SAW resonator oscillating at a frequency band of 800 MHz illustrated in Fig.1.

In a power source part shown in the lower portion of Fig.2, using one AAA dry battery, this voltage of 1.5 V is increased to DC 2.7 V finally by a DC-DC converter and the power source is supplied to each circuit within the present apparatus. A decrease in the level of an output voltage of the dry battery is always checked and is visually ensured by a light emitting diode. Also, a switching noise generated by the DC-DC converter is removed by a series regulator and it is-constructed so as not to lose the sound quality of the present apparatus.

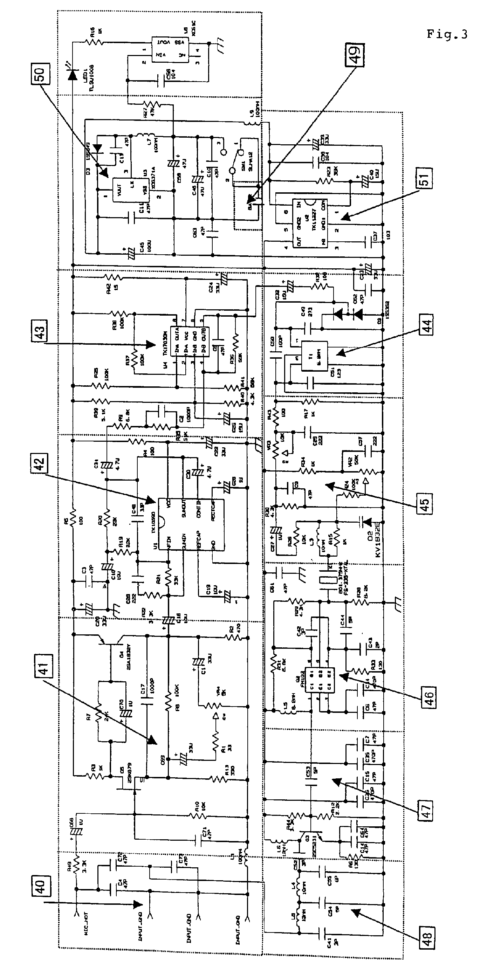

Fig.3 shows an example of a detailed circuit diagram of the transmitter device for wireless microphone according to the invention. In Fig.3, individual circuit configuration blocks of the transmitter of the invention shown in Fig.2 are described by numerical indication.

Individual numerical blocks will respectively be described below.

### 40. Microphone Terminal Input Circuit

Four terminals are connected to a canon connector with 3 pins and a field ground with a connector shape. A microphone body and a transmitter part are isolated in a high frequency manner at R49 and L1, and a high-frequency power supplied from block 49 is introduced to connectors MIC-HOT and INPUT-GND for microphone connection.

### 41. Input Amplifier Circuit

This is a low noise amplifier with low-voltage operation formed of an FET and a PNP transistor, and amplification is performed to the optimum input necessary for a compander.

Incidentally, VR4 is a pre-set resistor for gain adjustment for best adjusting levels different in respective microphone units.

### 42. Compander Circuit

A voice signal amplified by the input amplifier is compressed to 1/2 with logarithm, and a network inserted into an input terminal of the compander corrects middle and high regions to improve a signal-to-noise ratio in the whole system.

### 43. Pre-emphasis Circuit

In the case of 50 *µ*sec inserted into an input terminal of OPAMP (U4), constants R35, R9 and C2 emphasize a high-pass region to reduce a triangular noise peculiar to FM in a comprehensive manner.

### 44. Audio Filter Circuit

This is a low-pass filter with a cut-off frequency of 20 KHz comprising a diode D2 for limiter, T1, C50, C51 and C49. Adjacent channel leakage power is reduced and the S/N ratio is improved.

### 45. Modulation Circuit

Optimization of the voice signal is performed and a reverse voltage is applied to the variable capacitance diode D2. VR3 is a pre-set resistor for modulation degree adjustment and VR2 is a pre-set resistor for applying a DC current to the variable capacitance diode and setting a center frequency.

### 46. Oscillation and Buffer Amplification Circuit

While a dual transistor is connected in series to make good use of a circuit current, a negative resistance of an oscillation circuit is increased and oscillation failures in the SAW resonator are prevented. A buffer amplification circuit is an emitter grounded amplification circuit and minimizes reflection from an antenna and a high-frequency amplification circuit.

### 47. High-freqqency Amplification Circuit

A high-frequency signal with an about 0 dBm of a band of 800 MHz sent from the buffer amplification is amplified and high-frequency power with an about +10 dBm supplied to the antenna is generated.

### 48. Band-pass Filter Circuit

This is a circuit for suppressing second or higher harmonic signals generated at a high-frequency amplification stage and matching the impedance of the antenna and a secondary π type filter for passing only a fundamental component of a band of 800 MHz.

### 49. Battery

This is an AAA alkaline battery for supplying energy to all the transmitter circuits.

### 50. DC-DC Converter Circuit

This is a circuit for increasing a voltage of 1.5 V of the alkaline battery to 3 V, and a current of the primary side is about 60 mA and a current of the secondary side is about 25 mA and a voltage of operation completion is 0.9 V.

### 51. Power Stabilization and Noise Elimination Circuit

This is a series regulator for eliminating a step-up noise generated in the DC-DC converter circuit and an output voltage is DC 2.7 V.

### 52. Voltage Reduction Check Circuit

A battery voltage is monitored and an alarm is indicated before a function of the transmitter stops, and a lighting voltage of an LED is 1.1 V.

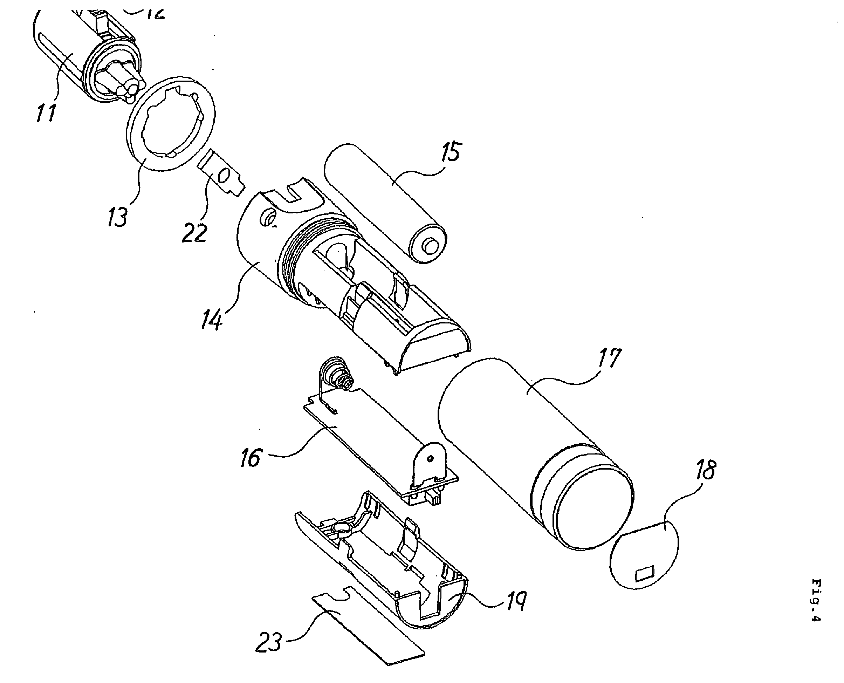

Next, Fig.4 shows an example of a component assembly construction constructing the transmitter device for wireless microphone according to the invention.

A canon connector 11 with XLR specifications to a microphone establishes mechanical and electrical connections with a microphone 31 by a lock mechanism part 12. Also, a ring-shaped elastic member 13 with rubber material is interposed in the mechanical connection surface of the side of the microphone and a transmitter device 21. As a result of this, mechanical rattle of the canon connector connection surface between the microphone 31 and the transmitter device 21 is eliminated and the mutual electrical connection as well as the mechanical connection are more ensured.

A plastic molding module 14 received in a tubular body case 17 made of metal is provided for receiving a dry battery 15 in one side and an electric circuit board 16 illustrated in Figs. 1 to 3 in the other side. A mounting surface of electric parts of the electric circuit board 16 is protected by a plastic cover 19. A seal 23 with notes is pasted on the plastic cover 19. The bottom of the body case 17 is blocked with a base plate 18.

A length of the body case 17 is about 1/4 the wavelength of a high-frequency oscillation signal generally, and the considerable short size of the order of 75 mm concretely is implemented. The present invention has an antenna structure with good radiation efficiency in which a microphone body is formed as an antenna element and a transmitter body is formed as a ground.

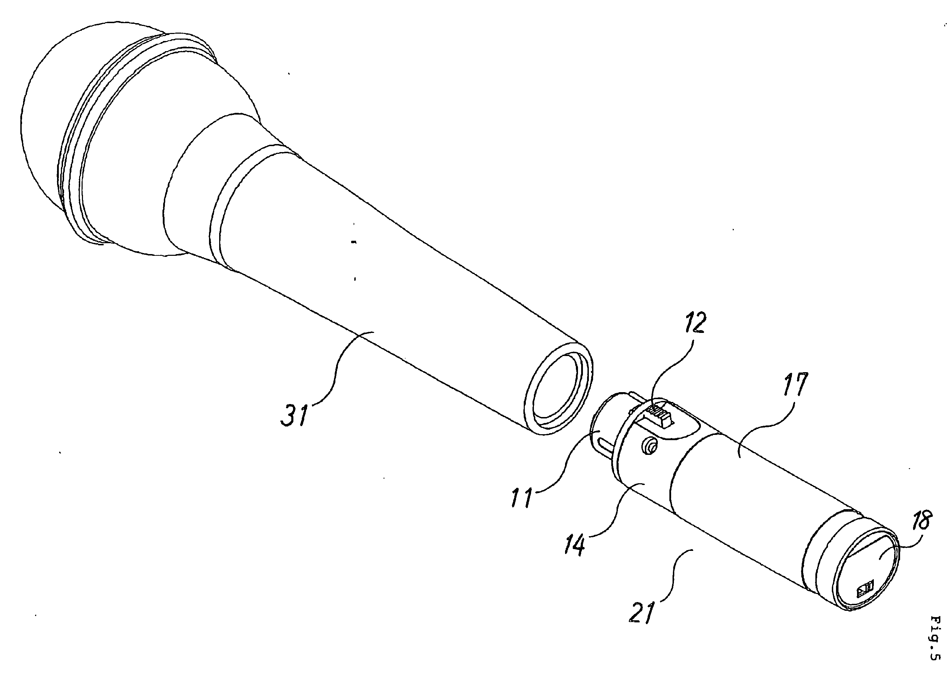

Fig.5 shows a combination of the transmitter device 21 for wireless microphone according to the invention mounting standard canon connector means 11 and the microphone 31 fitted in said transmitter device 21. Thus, the microphone body 31 can easily be mounted in and removed from the transmitter device 21 in a snap manner. The transmitter device according to the present invention implements the substantially same shape as a wire microphone.

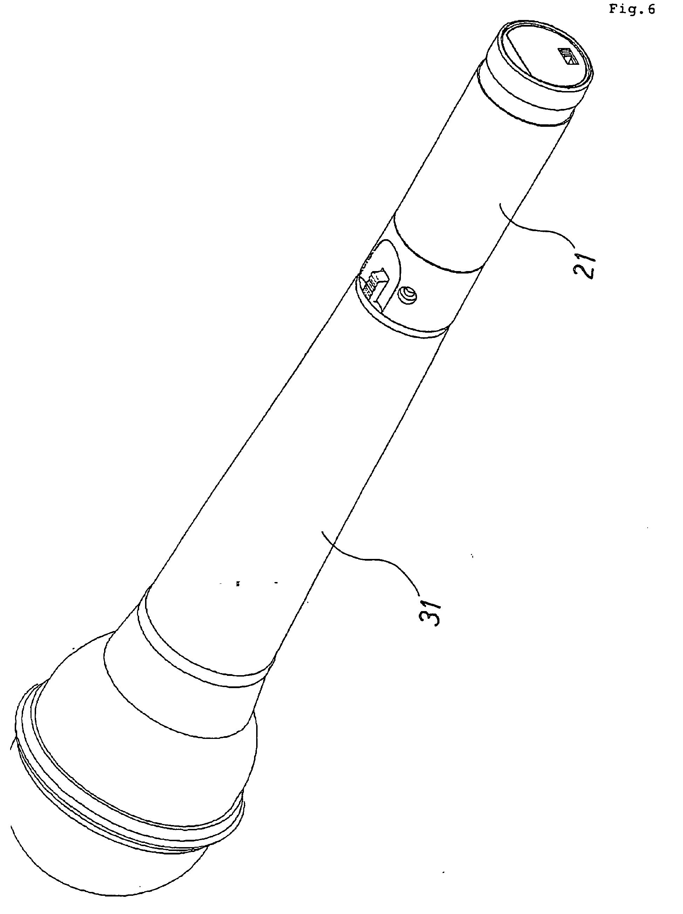

Fig.6 shows an example of an external view of the wireless microphone apparatus according to the invention. The microphone 31 and the transmitter device 21 connected through the canon connector form an integral outward appearance and they are compact and lightweight while maintaining functions and performance necessary for the wireless microphone apparatus for business, and a peculiar feeling of design seen in a conventional wireless microphone apparatus is fully solved.

In a transmitter device for wireless microphone according to the present invention, in order to develop a micro-miniature transmitter, technical improvements in conventional compander part, high-frequency part, power source part, body, etc. are entirely made, with the result that a compact and lightweight wireless microphone for business and a transmitter device of the microphone with a size similar to that of a canon connector (XLR) is achieved.

Big factors in implementation of the development of the transmitter device for wireless microphone according to the present invention are described above. The first factor is that a SAW resonator capable of directly oscillating a band of 800 MHz can be developed. The second factor is that all the internal component circuits including a SAW resonator modulation circuit including a pre-emphasis circuit are constructed so as to operate on a DC 2.7 V and thus circuit current consumption can be reduced to a minimum. Also, the third factor is that a high-frequency amplification part performs matching for an antenna and the SAW resonator capable of directly oscillating a band of 800 MHz is used in a band-pass filter part for reducing unnecessary radiation. Further, the fourth factor is that the antenna has a size with about 1/4 the wavelength of a SAW resonator output signal as which a body case of said transmitter device also serves, with the result that the length of about 7.5 cm and the diameter of 2.3 cm are achieved, and the transmitter device for wireless microphone with good portability as well as excellent design along with weight and size reductions is achieved.

Further, the battery received in present device is one AAA dry battery, with the result that 10 hours or longer of continuous operation can be performed. A weight of the present device including the metal receiving case and the battery achieves about 55 g.

## Claims

1. A transmitter device for a wireless microphone comprising:
connector means (40) for making connection to a microphone from which a voice signal is received;
low-frequency amplification means (41) for amplifying the voice signal;
high-frequency amplification means (47) for amplifying a high-frequency modulation signal modulated,
antenna means for radiating a high-frequency output signal amplified by radio waves, and
power source means (49, 50) for supplying electric power of a predetermined voltage; and **characterized by**:
surface acoustic wave oscillation means (46) having a surface acoustic wave resonator capable of directly oscillating a high-frequency oscillation signal,
modulation means (45) for performing frequency modulation of the high-frequency oscillation signal by directly modulating the surface acoustic wave resonator with the amplified voice signal, the modulation means (45) including an oscillation element, a modulation and oscillation circuit, and a buffer amplification circuit, and is arranged such that the voice signal superimposed on a bias voltage to a variable capacitance diode is applied to the oscillation element, and modulation is performed by changing a load capacity of the surface acoustic wave oscillation means (46) inserted into a base terminal of said surface acoustic wave resonator, wherein said buffer amplification circuit is arranged to minimize reflection from the antenna means and the high-frequency amplification means (47).

2. A transmitter device as claimed in Claim 1, further comprising a compander circuit (42) for improving a signal-to-noise ratio and increasing a dynamic range by logarithmic compression of the voice signal, and
a pre-emphasis circuit (43) for reducing noise by making an amplification degree of a high-pass frequency in the voice signal larger than that of other voice frequency regions.

3. A transmitter device as claimed in Claim 2, wherein the compander circuit performs ½ logarithm compression.

4. A transmitter device as claimed in Claim 1, 2 or 3, wherein the surface acoustic wave oscillation means (46) is arranged to output the high-frequency oscillation signal with a band of 800 MHz directly without multiplication.

5. A transmitter device as claimed in Claim 1, 2, 3, or 4, wherein the high-frequency amplification means (47) amplifies oscillation power of a band of 800 MHz outputted from the modulation means to +10 dBm with transmission output power at the antenna end of the antenna means.

6. A transmitter device as claimed in Claim 1, 2, 3, 4, or 5, wherein a band-pass filter circuit for eliminating a harmonic noise of the high-frequency oscillation signal and matching the impedance to the antenna means is connected to a backward stage of the high-frequency amplification means (47).

7. A transmitter device as claimed in any one or more of Claims 1 - 5, wherein a body case of said transmitter device also serves as the antenna means and said body case has a size with about 1/4 the wavelength of the high-frequency oscillation signal.

8. A transmitter device as claimed in any one or more of Claims 1 - 7, wherein the power source means is formed of a battery (49, 50) and a DC-DC converter (50) for increasing an output voltage of said battery.

9. A transmitter device as claimed in any one or more of Claims 1 - 8, wherein the battery comprises an AAA dry battery for providing 10 hours or longer of continuous operation.

10. A wireless microphone apparatus comprising a microphone (31) for outputting a voice signal, and a wireless transmitter (21) as claimed in any one or more of Claims 1 - 9.

11. A wireless microphone apparatus as claimed in Claim 10, wherein the microphone (31) is fitted and connected to the wireless transmitter (21) through a non-conductive elastic member (13) in the connector means and it is constructed so as to establish mutual electrical and mechanical connections by an interaction of fitting means in the connector means with the elastic member (13).

## Patentansprüche

1. Sendegerät für ein drahtloses Mikrofon, das Folgendes umfasst:
einen Verbinder (40) zur Herstellung einer Verbindung mit einem Mikrofon, von dem ein Sprachsignal empfangen wird;
Niederfrequenzverstärkungsmittel (41) zum Verstärken des Sprachsignals;
Hochfrequenzverstärkungsmittel (47) zum Verstärken eines modulierten Hochfrequenzmodulationssignals;
Antennen zum Abstrahlen eines durch Funkwellen verstärkten Hochfrequenzausgangssignals, und
eine Stromquelle (49, 50) zum Zuführen von elektrischer Leistung mit einer vorbestimmten Spannung; und **gekennzeichnet durch**:
Oberflächenschallwellen-Oszillationsmittel (46) mit einem Oberflächenschallwellen-Resonator, der ein Hochfrequenzoszillationssignal direkt zum Schwingen bringen kann;
Modulationsmittel (45) zum Ausführen einer Frequenzmodulation des Hochfrequenzoszillationssignals **durch** direktes Modulieren des Oberflächenschallwellen-Resonators mit dem verstärkten Sprachsignal, wobei das Modulationsmittel (45) ein Oszillationselement, eine Modulations- und Oszillationsschaltung und eine Pufferverstärkungsschaltung beinhaltet und so angeordnet ist, dass das Sprachsignal, das auf einer Vorspannung zu einer Kapazitätvariationsdiode überlagert ist, an das Oszillationselement angelegt wird und eine Modulation **durch** Ändern einer Lastkapazität des Oberflächenschallwellenoszillationsmittels (46) erfolgt, das in einen Basisanschluss des genannten Oberflächenschallwellen-Resonators eingeführt wird, wobei die genannte Pufferverstärkungsschaltung die Aufgabe hat, Reflexionen von den Antennen und dem Hochfrequenzverstärkungsmittel (47) minimal zu halten.

2. Sendegerät nach Anspruch 1, das ferner eine Kompanderschaltung (42) zum Verbessern eines Signalabstands und zum Erhöhen eines dynamischen Bereichs durch logarithmische Kompression des Sprachsignals sowie eine Vorverzerrungsschaltung (43) zur Geräuschreduzierung umfasst, in dem einen Verstärkungsgrad einer Hochpassfrequenz in dem Sprachsignal größer als die anderer Sprachfrequenzregionen gemacht wird..

3. Sendegerät nach Anspruch 2, wobei die Kompanderschaltung eine ½ Logarithmuskompression durchführt.

4. Sendegerät nach Anspruch 1, 2 oder 3, wobei das Oberflächenschallwellen-Oszillationsmittel (46) die Aufgabe hat, das Hochfrequenzoszillationssignal mit einem Band von 800 MHz direkt ohne Multiplikation auszugeben.

5. Sendegerät nach Anspruch 1, 2, 3 oder 4, wobei das Hochfrequenzverstärkungsmittel (47) Oszillationsleistung eines Bandes von 800 MHz, das vom Modulationsmittel ausgegeben wurde, auf +10 dBm mit Sendeausgangsleistung am Antennenende der Antenne verstärkt.

6. Sendegerät nach Anspruch 1, 2, 3, 4 oder 5, wobei eine Bandpassfilterschaltung zum Eliminieren von Oberwellenrauschen des Hochfrequenzoszillationssignals und zum Abgleichen der Impedanz auf die Antenne mit einer Rückwärtsstufe des Hochfrequenzverstärkungsmittels (47) verbunden ist.

7. Sendegerät nach einem der Ansprüche 1 - 5, wobei ein Körpergehäuse des genannten Sendegerätes auch als Antenne dient und das genannte Körpergehäuse eine Größe von etwa ¼ der Wellenlänge des Hochfrequenzoszillationssignals hat.

8. Sendegerät nach einem der Ansprüche 1 - 7, wobei die Stromquelle aus einer Batterie (49, 50) und einem DC-DC-Wandler (50) zum Erhöhen einer Ausgangsspannung der genannten Batterie gebildet ist.

9. Sendegerät nach einem der Ansprüche 1 - 8, wobei die Batterie eine AAA-Trockenbatterie für 10 Stunden Dauerbetrieb oder mehr umfasst.

10. Drahtlose Mikrofonvorrichtung, die ein Mikrofon (31) zum Ausgeben eines Sprachsignals und einen drahtlosen Sender (21) nach einem der Ansprüche 1 - 9 umfasst.

11. Drahtlose Mikrofonvorrichtung nach Anspruch 10, wobei das Mikrofon (31) mit dem drahtlosen Sender (21) durch ein nichtleitendes elastisches Element (13) im Verbinder ausgestattet und angeschlossen und so aufgebaut ist, dass es elektrische und mechanische Wechselverbindungen durch eine Interaktion von Montagemitteln im Verbinder mit dem elastischen Element (13) herstellt.

## Revendications

1. Dispositif émetteur pour microphone sans fil comprenant :
un moyen de connecteur (40) pour établir une connexion avec un microphone à partir duquel un signal vocal est reçu ;
un moyen d'amplification basse fréquence (41) pour amplifier le signal vocal;
un moyen d'amplification haute fréquence (47) pour amplifier un signal de modulation haute fréquence modulé,
un moyen d'antenne pour rayonner un signal de sortie haute fréquence amplifié par ondes radio, et
un moyen de source de puissance (49, 50) pour fournir une puissance électrique d'une tension prédéterminée ; et **caractérisé par** :
un moyen d'oscillation à ondes acoustiques de surface (46) ayant un résonateur à ondes acoustiques de surface capable de faire osciller directement un signal d'oscillation haute fréquence,
un moyen de modulation (45) pour effectuer une modulation de fréquence du signal d'oscillation haute fréquence en modulant directement le résonateur à ondes acoustiques de surface avec le signal vocal amplifié, le moyen de modulation (45) comportant un élément d'oscillation, un circuit de modulation et d'oscillation, et un circuit d'amplification tampon, et est agencé de telle sorte que le signal vocal superposé sur une tension de polarisation à une diode à capacité variable soit appliqué à l'élément d'oscillation, et la modulation est effectuée en changeant une capacité de charge du moyen d'oscillation à ondes acoustiques de surface (46) inséré dans un terminal de base dudit résonateur à ondes acoustiques de surface, où ledit circuit d'amplification tampon est agencé pour minimiser la réflexion depuis le moyen d'antenne et le moyen d'amplification haute fréquence (47).

2. Dispositif émetteur selon la revendication 1, comprenant en outre un circuit de compresseur-extenseur (42) pour améliorer un rapport signal/bruit et augmenter une gamme dynamique par compression logarithmique du signal vocal, et
un circuit de pré-accentuation (43) pour réduire le bruit en faisant en sorte qu'un degré d'amplification d'une fréquence passe-haut dans le signal vocal soit plus important que celui d'autres régions de fréquence vocale.

3. Dispositif émetteur selon la revendication 2, dans lequel le circuit de compresseur-extenseur exécute une demi-compression logarithmique.

4. Dispositif émetteur selon la revendication 1, 2 ou 3, dans lequel le moyen d'oscillation à ondes acoustiques de surface (46) est agencé afin de produire le signal d'oscillation haute fréquence avec une bande de 800 MHz directement sans multiplication.

5. Dispositif émetteur selon la revendication 1, 2, 3 ou 4, dans lequel le moyen d'amplification haute fréquence (47) amplifie la puissance d'oscillation d'une bande de 800 MHz sortie du moyen de modulation à + 10dBm avec une puissance d'émission de sortie à l'extrémité d'antenne du moyen d'antenne.

6. Dispositif émetteur selon la revendication 1, 2, 3, 4 ou 5, dans lequel un circuit de filtre passe-bande pour éliminer un bruit harmonique du signal d'oscillation haute fréquence et adapter l'impédance au moyen d'antenne est connecté à un étage arrière du moyen d'amplification haute fréquence (47).

7. Dispositif émetteur selon l'une quelconque des revendications 1 à 5, dans lequel un boîtier de corps dudit dispositif émetteur sert aussi de moyen d'antenne et ledit boîtier de corps a une dimension d'environ le quart de la longueur d'onde du signal d'oscillation haute fréquence.

8. Dispositif émetteur selon l'une quelconque des revendications 1 à 7, dans lequel le moyen de source de puissance est formé d'une pile (49, 50) et d'un convertisseur C.C.-C.C. (50) pour augmenter une tension de sortie de ladite pile.

9. Dispositif émetteur selon l'une quelconque des revendications 1 à 8, dans lequel la pile comprend une pile sèche AAA pour assurer 10 heures ou plus de fonctionnement continu.

10. Appareil de microphone sans fil comprenant un microphone (31) pour sortir un signal vocal, et un émetteur sans fil (21) selon l'une quelconque des revendications 1 à 9.

11. Appareil de microphone sans fil selon la revendication 10, dans lequel le microphone (31) est monté et connecté à l'émetteur sans fil (21) par le biais d'un élément élastique non conducteur (13) dans le moyen de connecteur et est construit de façon à établir des connexions électrique et mécanique mutuelles par une interaction de moyens d'ajustage dans le moyen de connecteur avec l'élément élastique (13).
